Europäisches Patentamt

European Patent Office

Office européen des brevets

(19)

(11) Numéro de publication: **0 135 409**
**B1**

(12) ## FASCICULE DE BREVET EUROPEEN

(45) Date de publication du fascicule du brevet:
**17.11.88**

(51) Int. Cl.⁴: **F 21 L 9/00,** H 02 J 7/02,
H 01 M 10/46

(21) Numéro de dépôt: **84401469.6**

(22) Date de dépôt: **11.07.84**

(54) **Dispositif de sécurité pour un appareil électrique à accumulateur rechargeable.**

(30) Priorité: **13.07.83 FR 8311690**

(43) Date de publication de la demande:
**27.03.85 Bulletin 85/13**

(45) Mention de la délivrance du brevet:
**17.11.88 Bulletin 88/46**

(84) Etats contractants désignés:
**AT BE CH DE GB IT LI LU NL**

(56) Documents cités:
**DE - A - 2 033 597**
**DE - B - 1 011 069**
**DE - B - 1 275 666**
**FR - A - 662 239**
**GB - A - 2 077 525**
**US - A - 3 225 155**
**US - A - 4 171 534**

**PATENTS ABSTRACTS OF JAPAN, vol. 5, no. 78
(E-58)[750], 22 mai 1981**

(73) Titulaire: **Black & Decker Inc., Drummond Plaza Office
Park 1423 Kirkwood Highway, Newark
Delaware 19711 (US)**

(72) Inventeur: **Verdier, Alain, 43 Chemin de la croix Pivort,
F-69110 Sainte Foy les Lyon (FR)**
Inventeur: **Touvler, Bernard, "Le Charrel", F-38490 Saint
Etienne de Saint-Geoirs (FR)**

(74) Mandataire: **Schrimpf, Robert et al, Cabinet
Regimbeau 26, Avenue Kléber, F-75116 Paris (FR)**

## Description

La présente invention concerne un dispositif de sécurité pour un appareil électrique à accumulateur rechargeable.

Plus précisément, elle concerne un dispositif de sécurité pour un appareil électrique du type comportant, comme il ressort de FR-A-662 239, et plus précisément de la figure 6 de ce document et des passages correspondants de la description de celui-ci:

a) d'une part une unité fonctionnelle groupant:

– des moyens consommateurs d'énergie électrique,

– des moyens accumulateurs d'énergie électrique,

– des moyens d'introduction et de guidage pour au moins une broche d'une unité de chargement des moyens accumulateurs indépendante de ladite unité fonctionnelle,

– un circuit de liaison électrique entre les moyens accumulateurs et les moyens consommateurs, ce circuit comportant en série entre les moyens accumulateurs et les moyens consommateurs, à proximité immédiate desdits moyens d'introduction et de guidage, une première borne des moyens consommateurs, laquelle occupe une position stable par rapport aux moyens d'introduction et de guidage, et une première borne des moyens accumulateurs, laquelle est élastiquement déplaçable par rapport aux moyens d'introduction et de guidage, entre deux positions à raison d'une première position qu'elle tend à gagner élastiquement et dans laquelle elle est en contact avec ladite première borne des moyens consommateurs occupant ladite position stable pour fermer le circuit et d'une deuxième position dans laquelle elle est écartée de la première borne des moyens consommateurs occupant ladite position stable pour ouvrir le circuit,

b) d'autre part une unité de chargement des moyens accumulateurs, cette unité comportant une source d'énergie électrique et étant indépendante de l'unité fonctionnelle mais susceptible d'être raccordée de façon amovible à cette dernière par des moyens de liaison électrique comportant au moins une première broche susceptible d'être introduite et guidée dans l'unité fonctionnelle, via lesdits moyens d'introduction et de guidage, jusque dans une position de raccordement dans laquelle elle retient ladite première borne des moyens accumulateurs dans ladite deuxième position en présentant au contact de cette borne une zone conductrice de l'électricité, reliée électriquement à une première borne de la source, et en isolant électriquement de ladite première borne des moyens accumulateurs et de ladite zone conductrice de l'électricité ladite première borne des moyens consommateurs.

A titre d'exemple non limitatif, une telle conception se révèle particulièrement avantageuse pour des appareils électriques portatifs, tels que des lampes dites «torches», qu'il est ainsi possible d'alléger de la source d'énergie électrique nécessaire au chargement des moyens accumulateurs.

En outre, dans le cas d'appareils dont les moyens consommateurs d'énergie électrique ne sont pas appelés à fonctionner pendant le chargement des moyens accumulateurs, comme c'est par exemple le cas des lampes-torches, elle permet d'ouvrir coercitivement le circuit de liaison électrique entre les moyens accumulateurs et les moyens consommateurs lors du raccordement desdites unités par les moyens de liaison électrique, pour interdire le fonctionnement des moyens consommateurs pendant la charge des moyens accumulateurs.

Ainsi, toute l'énergie produite par la source est utilisée pour charger les moyens accumulateurs, ce qui autorise une charge aussi rapide que possible, et il n'est pas nécessaire pour autant de surdimensionner la source; dès lors que le raccordement est effectué entre l'unité fonctionnelle et l'unité de chargement, la charge des moyens accumulateurs s'effectue avec certitude; on remarquera que l'utilisation d'un voyant lumineux indiquant la charge devient alors inutile.

Cependant, l'appareil électrique décrit en référence à la figure 6 de FR-A-662 239 présente un inconvénient particulièrement critique dans le cas précis d'un appareil électrique fonctionnant sur moyens accumulateurs.

En effet, la nécessité de prévoir dans l'unité fonctionnelle un commutateur de mise en marche ou d'arrêt à volonté des moyens consommateurs conduit alors à prévoir dans le circuit de liaison électrique entre les moyens accumulateurs et les moyens consommateurs, outre au moins une zone d'ouverture coercitive au raccordement de l'unité fonctionnelle et de l'unité de chargement, une zone d'ouverture-fermeture, cette fois à volonté, qui n'apparaît pas sur la figure précitée de ce document mais dont l'examen des autres figures et de la description de celui-ci révèle cependant qu'elle est dissociée de toute zone d'ouverture coercitive.

Or, ces différentes zones d'interruption du circuit électrique constituent autant de causes de pertes d'énergie électrique dans le circuit en raison d'une oxydation inévitable des pièces, telle que des lâmes métalliques, prévues dans chacune de ces zones pour être tantôt mises en contact mutuel pour fermer le circuit, tantôt séparées pour ouvrir ce circuit, et d'un encrassement de ces pièces notamment par calaminage au fur-et-à-mesure des mises en contact et séparations successives.

De telles pertes accélèrent la décharge des moyens accumulateurs en entraînant, lorsque les moyens consommateurs sont en service, une consommation d'électricité sensiblement supérieure à celle qu'exigent les seuls moyens consommateurs; de ce fait, l'autonomie de l'unité fonctionnelle entre deux opérations de recharge des moyens accumulateurs est faible.

L'un des buts de la présente invention est de remédier à cet inconvénient.

Plus généralement, la présente invention a pour but de réduire les pertes dans le circuit de liaison entre les moyens accumulateurs et les moyens consommateurs, pour augmenter l'autonomie de l'unité fonctionnelle et espacer au maximum les opérations de recharge.

Un autre but de la présente invention est de rationaliser la fabrication et la maintenance d'un appareil du type précité.

A cet effet, la présente invention propose un dispositif de sécurité pour un appareil électrique du type précité, se caractérisant en ce que l'unité fonctionnelle comporte en outre des moyens de mise en marche ou d'arrêt à volonté des moyens consommateurs, coopérant avec ladite première borne des moyens consommateurs pour la déplacer à volonté entre ladite position stable et une autre position stable écartée de celle-ci et desdites première et deuxième positions de la première borne des moyens accumulateurs pour isoler électriquement les moyens consommateurs vis-à-vis des moyens accumulateurs, que ladite broche occupe ou non ladite position de raccordement.

En combinant la zone d'ouverture-fermeture à volonté et la zone d'ouverture coercitive au raccordement de l'unité fonctionnelle et de l'unité de chargement, et même dans le cas préféré où il est prévu une deuxième zone d'ouverture coercitive au raccordement, la présente invention permet de réduire sensiblement les pertes dans le circuit de liaison électrique entre les moyens consommateurs et les moyens accumulateurs, et ceci d'autant plus que l'on peut réduire également la longueur de ce circuit.

Il en résulte une augmentation sensible de l'autonomie de l'unité fonctionnelle entre deux opérations de recharge des moyens accumulateurs, c'est-à-dire un plus grand confort d'utilisation et une plus grande économie pour l'utilisateur.

En outre, le nombre des pièces nécessaires à la réalisation de l'appareil peut être réduit, alors même que le dispositif de sécurité se révèle aussi efficace que celui qui ressort de la figure 6 de FR-A-662 239, et il en résulte une simplification considérable et par conséquent une grande économie de montage et de maintenance de l'appareil.

D'autres caractéristiques et avantages du dispositif de sécurité selon l'invention ressortiront de la description ci-dessous, relative à un mode de mise en œuvre non limitatif, ainsi que des dessins annexés qui font partie intégrante de cette description.

Ces dessins sont tous relatifs à une application du dispositif selon l'invention à une lampe-torche, mais il est bien entendu que d'autres appareils électriques portatifs pourraient être ainsi équipés, comme par exemple certains appareils électroménagers légers tels que des aspirateurs de table.

– La figure 1 montre une vue en élévation latérale d'une lampe-torche équipée selon l'invention, et dont l'unité fonctionnelle, à savoir la lampe-torche proprement dite, est raccordée à l'unité de chargement, constituant dans cet exemple un socle.

– La figure 2 montre une vue de l'ensemble en coupe partielle selon la ligne II–II de la figure 1.

– La figure 3 montre une vue en coupe selon la ligne III–III de la figure 2.

– Les figures 4 et 5 montrent des vues du dispositif de sécurité conforme à l'invention, dans le sens de la flèche IV de la figure 3, le commutateur marche-arrêt de la lampe-torche étant placé respectivement en position arrêt et en position marche et le raccordement entre l'unité fonctionnelle et l'unité de chargement étant assuré dans les deux cas.

– Les figures 6 et 7 montrent des vues en tout point analogue à celles des figures 4 et 5, respectivement si ce n'est que l'unité fonctionnelle et l'unité de chargement ont été séparées.

Sur l'ensemble des figures, on a désigné de façon générale par 1 l'unité fonctionnelle, c'est-à-dire la lampe-torche proprement dite, groupant des moyens consommateurs (2) d'énergie électrique sous la forme d'une ampoule électrique, des moyens accumulateurs d'énergie électrique sous la forme de deux piles électriques rechargeables 3 et 4, et un circuit de liaison électrique entre ces moyens accumulateurs 3, 4 et les moyens consommateurs 2, et par 5 une unité de chargement des moyens accumulateurs 3, 4, cette unité comportant une source d'énergie électrique 6, sous la forme d'un transformateur-redresseur propre à être branché sur le courant alternatif du réseau pour abaisser sa tension et le redresser, de façon à le rendre propre à la charge des accumulateurs 3 et 4 comme cela est connu en soi.

Les unités 1 et 5 sont indépendantes, mais l'unité 5 présente une partie 7 formant un socle pour l'unité fonctionnelle 1 et présentant à cet effet d'une part une face 8, plane, de liaison avec un support quelconque et d'autre part, à l'opposé de cette face 8, une cavité 9 propre à recevoir et retenir de façon amovible, dans une position relative unique, une partie convexe, complémentaire, 10, que présente à cet effet l'unité fonctionnelle 1; la solidarisation mutuelle amovible est avantageusement assurée par encliquetage élastique de pattes telles que 11 (patte rigide) et 12 (patte élastique) que présente intérieurement la cavité 9, dans des dépressions respectivement complémentaires telles que 13 et 14 que présente à cet effet la partie convexe 10 de l'unité fonctionnelle 1; la réalisation d'une telle structure de telle sorte qu'elle n'autorise une solidarisation mutuelle que dans une position relative parfaitement déterminée est du domaine des aptitudes normales d'un homme du métier, et ne sera pas davantage détaillée; on désignera simplement par 15 une direction moyenne de déplacement relatif de l'unité fonctionnelle 1 et du socle 7 à la solidarisation mutuelle ou à la désolidarisation.

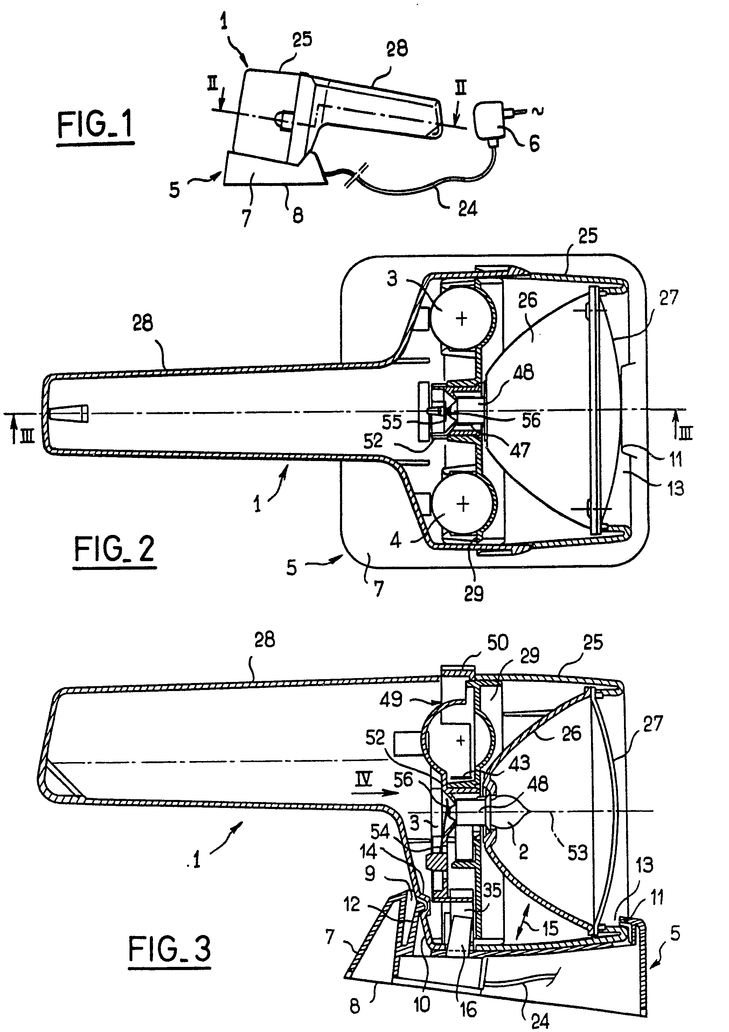

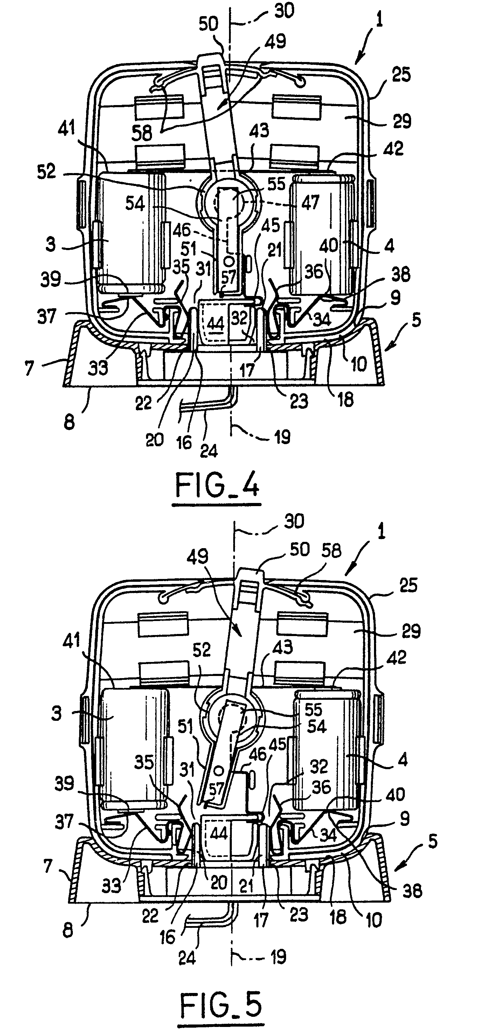

A l'impossibilité de solidariser mutuellement l'unité fonctionnelle 1 et le socle 7 dans des positions autres que leur position relative prédéterminée, visible aux figures 1 à 5, contribuent deux broches 16 et 17, plus particulièrement visibles aux figures 4 à 7, lesquelles broches 16 et 17 forment une saillie au fond 18 de la cavité 9, approximativement parallèlement à la direction 15; les deux broches 16 et 17 sont plates, parallèles entre elles, et disposées symétriquement l'une de l'autre par rapport à un plan 19 incluant la direction 15 et définissant un plan de symétrie pour le socle 7 et pour chacun des éléments de celui-ci déjà décrits, à savoir la face 8, la cavité 9, la patte 11 et la patte 12; ce plan 19 est confondu avec le plan III–III.

Chacune des broches 16 et 17 présente deux composants plats, parallèles au plan 19, à raison d'un composant isolant vis-à-vis de l'électricité et réalisé par exemple en matière plastique, respectivement 20 ou 21, et d'un composant juxtaposé au premier dans le sens d'un éloignement par rapport au plan 19 et qui est quant à lui conducteur de l'électricité, à savoir une lame métallique 22 et une lame métallique 23; les deux broches 16 et 17, c'est-à-dire leurs constituants 20 à 23, sont rigides et fixes par rapport au socle 7.

Les deux lames métalliques 22 et 23 constituent deux bornes, de polarités inverses, du circuit secondaire du transformateur-redresseur 6, auquel elles sont reliées dans l'exemple illustré, où le transformateur-redresseur 6 est dissocié du socle 7, par un cordon souple 24 de connexion électrique, à deux conducteurs.

Les deux lames 22 et 23 sont destinées à assurer une liaison électrique entre le transformateur-redresseur 6 et deux bornes respectivement correspondantes 35, 36 des moyens accumulateurs 3, 4 de l'unité fonctionnelle 1 lorsque cette dernière est solidarisée avec le socle 7.

Des moyens interrupteurs ouvrent alors coercitivement le circuit de liaison électrique entre les moyens accumulateurs 3, 4 et les moyens consommateurs 2, pour interdire le fonctionnement de ces derniers pendant la charge.

Les dispositions adoptées à cet effet dans l'unité fonctionnelle 1 vont à présent être décrites, en référence aux figures 2 à 7.

Il ressort de ces figures, et plus particulièrement des figures 2 et 3, que l'unité fonctionnelle 1 comporte intérieurement, immobilisé par encliquetage élastique entre d'une part un bloc optique 25 contenant un réflecteur 26 et une glace 27 enveloppant l'ampoule 2 et d'autre part un bloc de préhension 28 formant poignée, eux-mêmes solidarisés entre eux de façon amovible par encliquetage élastique, un bloc support 29 qui porte, à l'intérieur des deux précédents, l'ampoule électrique 2, les deux piles rechargeables 3, 4, et le circuit de liaison électrique entre ces éléments, et qui se trouve engagé sur les deux broches 16 et 17 lorsque l'unité fonctionnelle 1 est solidarisée avec le socle 7.

A cet effet, le bloc support 29 présente, dans une zone qui débouche à l'extérieur de l'unité fonctionnelle 1 dans la partie convexe 10 de celle-ci et qui vient se placer contre le fond 18 de la cavité 9 du socle 7 lorsque l'unité fonctionnelle 1 et ce socle 7 sont solidarisés, deux glissières 31 et 32 assurant un engagement guidé respectivement de la broche 16 et de la broche 17 à l'intérieur du bloc support 29 lors de la solidarisation de l'unité fonctionnelle 1 avec le socle 7 par déplacement relatif suivant la direction 15; à cet effet, les glissières 31 et 32 occupent, par rapport à un plan 30 de l'unité fonctionnelle 1 confondu avec le plan III–III et se confondant avec le plan 19 lors de la solidarisation mutuelle de l'unité fonctionnelle 1 et du socle 7, des positions identiques à celles que les broches 16 et 17 occupent par rapport au plan 19, avec des orientations approximativement parallèles à la direction 15.

Excepté dans leurs zones les plus éloignées du plan 30, et destinées à venir se placer en regard de la lame 22 et de la lame 23, respectivement, lorsque l'unité fonctionnelle 1 et le socle 7 sont assemblés, les glissières 31 et 32 sont délimitées par un matériau isolant vis-à-vis de l'électricité, comme par exemple une matière plastique, constituant en une seule pièce l'intégralité du bloc support 29.

Par contre, la zone de chacune des glissières 31 et 32 qui est appelée à se placer alors en regard de la lame 22 ou de la lame 23, respectivement, est définie par une première zone d'extrémité formant borne, respectivement 35 ou 36, d'une lame métallique, élastiquement déformable, respectivement 33 ou 34, présentant une deuxième zone d'extrémité, respectivement 37 ou 38, en contact de liaison électrique avec l'un respectif des deux pôles 39, 40 des moyens accumulateurs, c'est-à-dire dans l'exemple illustré respectivement avec le pôle positif 39 de la pile rechargeable 3 et le pôle négatif 40 de la pile rechargeable 4, le pôle négatif 41 de la pile rechargeable 3 étant par ailleurs relié électriquement au pôle positif 42 de la pile rechargeable 4 par une barrette métallique 43 portée comme les piles 3 et 4 et les lames 33 et 34, de façon solidaire, par des reliefs du bloc support 29.

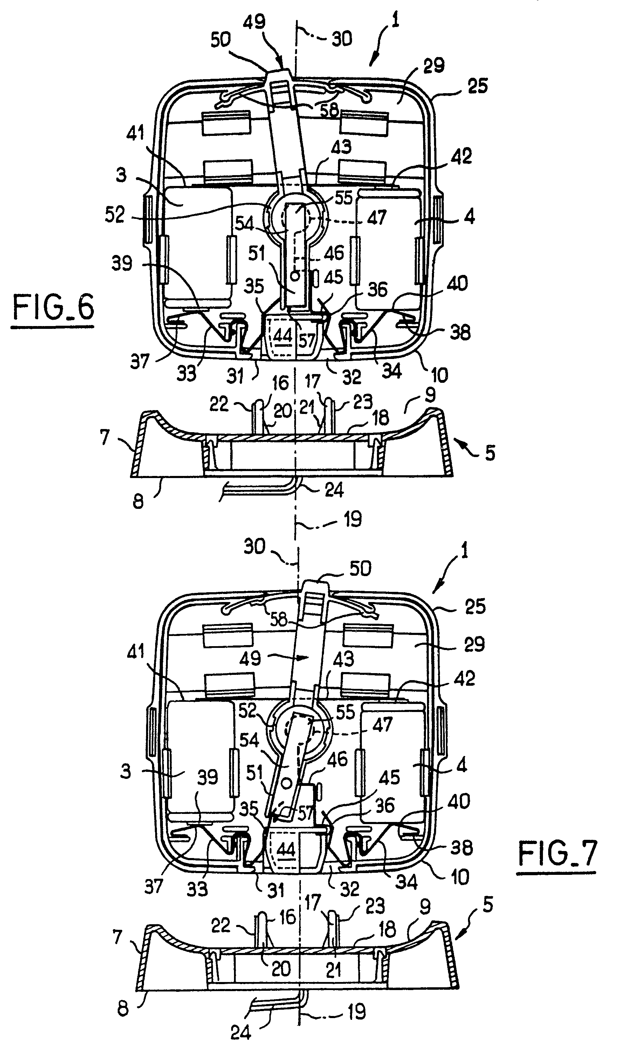

Ces reliefs assurent une immobilisation totale, vis-à-vis du bloc support 29, des deux piles rechargeables 3 et 4, de la barrette 43 et de la zone de chacune des lames 33 et 34 située du côté de l'extrémité de celles-ci, respectivement 37 ou 38, en contact électrique avec les moyens accumulateurs 3, 4; mais ils laissent par contre l'autre zone d'extrémité, respectivement 35 ou 36, des lames 33 et 34 libre de se déplacer élastiquement entre une position de repos, visible notamment à la figure 6, dans laquelle cette zone s'applique élastiquement contre la partie 44 du bloc support 29 qui, située entre les glissières 31 et 32, délimite celles-ci vers le plan 30, et une position dans laquelle chacune de ces zones d'extrémité 35 et 36 est écartée de cette partie 44 et du plan 30, cette deuxième position étant une position instable que les parties d'extrémité 35 et 36 des lames 33 et 34 tendent à quitter pour revenir élastiquement à la première position, c'est-à-dire à leur position de contact avec la partie 44 du bloc support 29; la deuxième position, que les parties d'extrémité 35 et 36 des lames 33 et 34 ne peuvent gagner que de façon forcée, notamment lors de l'introduction des broches 16 et 17 dans les glissières 31 et 32, respectivement, est illustrée aux figures 4 et 5.

Lorsque les zones d'extrémité 35 et 36 des lames 33 et 34 occupent leur première position ou position de repos illustrée aux figures 6 et 7, les moyens consommateurs d'énergie, en pratique la lampe 2, peuvent être branchés en série entre ces zones.

A cet effet, du côté de la glissière 32, la partie 44 du bloc support 29 est couverte partiellement par une zone d'extrémité formant borne 45 d'une lame métallique 46 présentant par ailleurs une deuxième zone d'extrémité 47 qui, comme il ressort également des figures 2 et 3, enveloppe au moins partiellement le culot 48 de la lampe 2, lequel culot est en liaison électrique avec le filament de celle-ci; ainsi, en position de repos de la zone d'extrémité 36 de la lame 34, dans laquelle cette zone d'extrémité 36 repose contre la partie 44 du bloc support 29 et par conséquent également contre la zone d'extrémité 45 de la lame métallique 46, une liaison électrique est assurée entre le filament de la lampe 2 et le pôle 40 des moyens accumulateurs 3, 4.

Pour assurer par ailleurs à volonté une liaison électrique du filament de la lampe 2 avec l'autre pôle 39 des moyens accumulateurs 3, 4 est prévu un commutateur marche-arrêt 49 se présentant sous la forme d'une barrette en matériau isolant, et par exemple en matière plastique, présentant une première zone ou zone de manipulation 50 accessible de l'extérieur de l'unité fonctionnelle 1, une deuxième zone ou zone de contact 51 placée à l'intérieur de l'unité fonctionnelle 1, entre les zones d'extrémité 35 et 36 des lames 33 et 34, et une zone intermédiaire 52 articulée sur le bloc support 29, au pivotement relatif autour d'un axe 53 commun à la lampe 2, y compris au culot 48 de celle-ci et par conséquent à la deuxième zone d'extrémité 47 de la lame 46, et qui correspond pour le réflecteur 26 à un axe optique; les moyens propres à autoriser un tel pivotement sont ici constitués par des collerettes complémentaires, de même axe 53, que la barrette 49 présente dans sa zone 52 et que le bloc support 29 présente autour de l'emplacement de la lampe 2, en pratique supportée vis-à-vis du bloc support 29 du fait de l'enveloppement de son culot 48 par la zone d'extrémité 47 de la lame 46; la réalisation pratique de ces moyens comme le choix de moyens différents entrent dans le cadre des aptitudes normales d'un homme du métier.

Entre sa zone intermédiaire 52 et sa zone d'extrémité 51, la barrette isolante 49 porte une lame métallique 54 présentant dans la zone 52 de la barrette 49 une première zone d'extrémité 55 en liaison électrique avec le filament de la lampe 2 par contact avec un plot central 56 de celle-ci suivant l'axe 53, alors que, dans la zone d'extrémité 51 de la barrette 49, la lame 54 présente une deuxième zone d'extrémité formant borne 57 que l'utilisateur peut faire évoluer, en agissant sur la zone 50 de la barrette 49 pour faire pivoter celle-ci dans un sens ou dans l'autre par rapport au bloc support 29, entre une première position stable, illustrée à la figure 6, où la zone d'extrémité 57 est écartée de la zone d'extrémité 35 de la lame 33 alors en appui libre contre la partie 44 du bloc support 29, ce qui isole les zones 57 et 35 et correspond à l'ouverture du circuit de liaison électrique 34, 46, 54, 33 entre les moyens accumulateurs 3, 4 et les moyens consommateurs 2, et une deuxième position stable, illustrée à la figure 7, dans laquelle la zone d'extrémité 57 de la lame 54 est placée au contact de la zone d'extrémité 35 de la lame 33, encore en appui partiel contre la partie 44 du bloc support 29, ce qui correspond à la fermeture du circuit de liaison électrique ci-dessus défini, c'est-à-dire à l'allumage de la lampe 2; la stabilité de ces deux positions de l'extrémité 51 de la lampe 54 est par exemple assurée par encliquetage élastique de la barrette 49 vis-à-vis du bloc support 29 dans les deux positions correspondantes de cette barrette, grâce à des moyens connus de l'homme du métier et schématisés en 58.

On remarquera que les deux états qui viennent d'être décrits supposent que les zones d'extrémité 35 et 36 des lames 33 et 34 reposent librement contre la partie 44 du bloc support 29, ce qui suppose que les broches 16 et 17 ne soient pas engagées dans les glissières 31 et 32, c'est-à-dire que l'unité fonctionnelle 1 soit détachée du socle 7.

Si, par contre, on solidarise l'unité fonctionnelle 1 avec le socle 7, c'est-à-dire si les broches 16 et 17 sont engagées dans les glissières 31 et 32, les zones d'extrémité 35 et 36 des lames 33 et 34 sont écartées de la partie 44 du bloc support 29 sous l'action de ces broches, et amenées dans la position illustrée aux figures 4 et 5 dans laquelle d'une part la zone d'extrémité 36 de la lame 34 est écartée de la zone d'extrémité 45 de la lame 46, et dans laquelle la zone d'extrémité 35 de la lame 33 est écartée de l'une et l'autre des positions stables de la zone d'extrémité 57 de la lame 54 définies plus haut, à savoir aussi bien sa position définie en référence à la figure 6 comme une position d'ouverture du circuit de liaison entre les moyens accumulateurs 3, 4 et les moyens consommateurs 2 (figure 4) que la position définie plus haut en référence à la figure 7 comme une position de fermeture de ce circuit (figure 5); par conséquent, dans ce cas, quelle que soit la position qu'occupe la barrette 49 de commutation marche-arrêt, le circuit est ouvert entre les bornes des moyens accumulateurs que constituent les zones d'extrémité 35 et 36 des lames 33 et 34 et les bornes des moyens consommateurs que constituent respectivement la zone d'extrémité 45 de la lame 46 et la zone d'extrémité 57 de la lame 54.

Par contre, la zone d'extrémité 35 de la lame 33 est alors placée au contact de la lame 22 de la broche 16 et la zone d'extrémité 36 de la lame 34 est placée au contact de la lame 23 de la broche 17, ce qui assure une liaison avec les polarités respectives du circuit secondaire du transformateur-redresseur 6 pour assurer la recharge des moyens accumulateurs 3, 4; en raison de l'ouverture forcée du circuit de liaison entre les moyens consommateurs 2 et les moyens accumulateurs 3, 4, on est assuré de ce que toute l'énergie fournie par le transformateur-redresseur 6 est utilisée pour la charge des moyens accumulateurs 3, 4.

Naturellement, le mode de mise en œuvre du dispositif de sécurité selon l'invention qui vient d'être décrit pourrait connaître de nombreuses variantes sans que l'on sorte pour autant du cadre de l'invention, notamment en fonction d'une adaptation à des appareils électriques autres qu'une lampe-torche; on remarquera cependant la grande simplicité du dispositif dans le mode de réalisation qui vient d'être décrit et qui est actuellement préféré, bien qu'il soit possible de le simplifier en prévoyant une coupure coercitive unique du circuit de liaison entre les moyens accumulateurs et les moyens consommateurs lors du raccordement des moyens accumulateurs à la source d'énergie électrique de l'unité de chargement; en comparaison avec le mode de réalisation qui vient d'être décrit, cette coupure unique serait définie de la façon décrite en référence aux zones d'extrémité respectives 57 et 35 des lames 54 et 33 et à la broche 16.

## Revendications

1. Dispositif de sécurité pour un appareil électrique du type comportant:

a) d'une part une unité fonctionnelle (1) groupant:

– des moyens consommateurs d'énergie électrique (2),

– des moyens accumulateurs d'énergie électrique (3, 4),

– des moyens (31) d'introduction et de guidage pour au moins une broche (16) d'une unité (5) de chargement des moyens accumulateurs (3, 4) indépendante de latide unité fonctionnelle (1),

– un circuit (33, 54, 46, 34) de liaison électrique entre les moyens accumulateurs (3, 4) et les moyens consommateurs (2), ce circuit comportant, en série entre les moyens accumulateurs (3, 4) et les moyens consommateurs, à proximité immédiate desdits moyens (31) d'introduction et de guidage, une première borne (57) des moyens consommateurs (2), laquelle occupe une position stable par rapport aux moyens (31) d'introduction et de guidage, et une première borne (35) des moyens accumulateurs (3, 4), laquelle est élastiquement déplaçable par rapport aux moyens (31) d'introduction et de guidage, entre deux positions à raison d'une première position qu'elle tend à gagner élastiquement et dans laquelle elle est en contact avec ladite première borne (57) des moyens consommateurs (2) occupant ladite position stable pour fermer le circuit et d'une deuxième position dans laquelle elle est écartée de la première borne (57) des moyens consommateurs (2) occupant ladite position stable pour ouvrir le circuit,

b) d'autre part une unité (5) de chargement des moyens accumulateurs (3, 4), cette unité (5) comportant une source d'énergie électrique (6) et étant indépendante de l'unité fonctionnelle (1) mais susceptible d'être raccordée de façon amovible à cette dernière par des moyens (16, 17) de liaison électrique comportant au moins une première broche (16) susceptible d'être introduite et guidée dans l'unité fonctionnelle (1), via lesdits moyens (31) d'introduction et de guidage, jusque dans une position de raccordement dans laquelle elle retient ladite première borne (35) des moyens accumulateurs (3, 4) dans ladite deuxième position en présentant au contact de cette borne (35) une zone (22) conductrice de l'électricité, reliée électriquement à une première borne de la source (6), et en isolant électriquement de ladite première borne (35) des moyens accumulateurs (3, 4) et de ladite zone (22) conductrice de l'électricité ladite première borne (57) des moyens consommateurs (2), caractérisé en ce que l'unité fonctionnelle (1) comporte en outre des moyens (49) de mise en marche ou d'arrêt à volonté des moyens consommateurs (2), coopérant avec ladite première borne (57) des moyens consommateurs (2) pour la déplacer à volonté entre ladite position stable et une autre position stable écartée de celle-ci et desdites première et deuxième positions de la première borne (35) des moyens accumulateurs (3, 4) pour isoler électriquement les moyens consommateurs (2) vis-à-vis des moyens accumulateurs (3, 4), que ladite broche (16) occupe ou non ladite position de raccordement.

2. Dispositif de sécurité selon la revendication 1, caractérisé en ce que les moyens (49) de mise en marche ou d'arrêt à volonté des moyens consommateurs (2) comportent:

– une barrette (49) en matériau isolant, des moyens de guidage de la barrette (49) au pivotement autour d'un axe (53) par rapport aux moyens (31) d'introduction et de guidage,

– une lame (54) conductrice de l'électricité portée de façon solidaire par la barrette (49) et présentant une première zone (55) en appui contre un plot (56) de contact électrique des moyens consommateurs (2) dans une zone correspondant à l'axe (53) et une deuxième zone (57) décalée par rapport à l'axe (53) et définissant ladite première borne (57) des moyens consommateurs (2),

– des moyens (50) de manipulation de la barrette (49) au pivotement autour de l'axe (53) entre deux positions correspondant, pour la deuxième zone (57) de ladite lame (54), auxdites positions stables de la première borne (57) des moyens consommateurs.

3. Dispositif de sécurité selon la revendication 2, les moyens consommateurs (2) étant constitués par une lampe (2) présentant un filament en liaison électrique d'une part avec un culot (48) de celle-ci et d'autre part avec un plot central (56) de celle-ci, caractérisé en ce que ledit plot (56) de contact électrique est ledit plot central de la lampe (2).

4. Dispositif de sécurité selon l'une quelconque des revendications 2 et 3, caractérisé en ce qu'il comporte des moyens (58) d'immobilisation de la barrette (49) dans lesdites deux positions de celle-ci.

5. Dispositif de sécurité selon l'une quelconque des revendications 1 à 4, caractérisé en ce que ladite première borne (35) des moyens accumulateurs (3, 4) consiste en une zone d'extrémité, libre, d'une lame métallique (33) élastiquement déformable présentant par ailleurs une zone (37) fixe par rapport aux moyens (31) de guidage de la broche (16).

6. Dispositif de sécurité selon l'une quelconque des revendications 1 à 5, caractérisé en ce que, en outre,

— ledit circuit (33, 54, 46, 34) de liaison électrique comporte, en série entre les moyens accumulateurs (3, 4) et les moyens consommateurs (2), une deuxième borne (36) des moyens accumulateurs (3, 4) et une deuxième borne (45) des moyens consommateurs (2), reliées électriquement entre elles en dehors dudit raccordement,

— les moyens de liaison électrique (16, 17) comportent une deuxième broche (17) propre à coopérer avec lesdites deuxièmes bornes (36, 45), lors dudit raccordement, pour les isoler électriquement l'une de l'autre et présenter au contact de la deuxième borne (36) des moyens accumulateurs (3, 4) une zone (23) conductrice de l'électricité, reliée électriquement à une deuxième borne de la source (6).

7. Dispositif de sécurité selon la revendication 6, caractérisé en ce que lesdites deuxièmes bornes (36, 45) sont déplaçables relativement entre au moins une première position relative qu'elles tendent à gagner élastiquement et dans laquelle elles sont en contact mutuel pour fermer le circuit et une deuxième position relative dans laquelle elles sont écartées mutuellement pour ouvrir le circuit, en ce que l'unité fonctionnelle (1) comporte des moyens (32) de guidage pour ladite deuxième broche (17), à proximité desdites deuxième bornes (36, 45), pour autoriser son introduction dans l'unité fonctionnelle (1) jusque dans une position dans laquelle elle retient lesdites deuxièmes bornes (36, 45) dans ladite deuxième position relative et présente au contact de la deuxième borne (36) des moyens accumulateurs (3, 4) ladite zone (23).

8. Dispositif de sécurité selon la revendication 7, caractérisé en ce que ladite deuxième borne (45) des moyens consommateurs (2) occupe une position stable par rapport aux moyens (32) de guidage de la deuxième broche (17) et en ce que ladite deuxième borne (36) des moyens accumulateurs (3, 4) est élastiquement déplaçable par rapport auxdits moyens de guidage (32) de la deuxième broche (17) entre une position qui coïncide approximativement avec ladite position stable de la deuxième borne (45) des moyens consommateurs (2) pour définir ladite première position relative des deuxièmes bornes (36, 45), et une position dans laquelle elle est écartée de ladite position stable de la deuxième borne (45) des moyens consommateurs (2) pour définir ladite deuxième position relative des deuxièmes bornes (36, 45).

9. Dispositif de sécurité selon la revendication 8, les moyens consommateurs (2) étant constitués par une lampe (2) présentant un filament en liaison électrique d'une part avec un culot (48) de celle-ci et d'autre part avec un plot central (56) de celle-ci, caractérisé en ce que la deuxième borne (45) des moyens consommateurs est constituée par une première zone (45) d'une lame (46) conductrice de l'électricité présentant par ailleurs une deuxième zone (47) enveloppant au moins partiellement le culot (48) de la lampe (2).

10. Dispositif de sécurité selon l'une quelconque des revendications 8 et 9, caractérisé en ce que ladite deuxième borne (36) des moyens accumulateurs (3, 4) consiste en une zone d'extrémité, libre, d'une lame métallique (34) élastiquement déformable présentant par ailleurs une zone (38) fixe par rapport aux moyens de guidage (32) de la deuxième broche (17).

## Claims

1. A safety device for an electrical apparatus of the type comprising:
   a) firstly a functional unit (1) grouping together: electrical energy consuming means (2); electrical energy storage battery means (3, 4); insertion and guidance means (31) for at least one pin (16) of a storage battery means charger unit (5) independent of the said functional unit; and

   an electrical connection circuit (33, 54, 46, 34) for providing an electrical connection between the storage battery means (3, 4) and the consuming means (2), this circuit comprising, connected in series between the storage battery means (3, 4) and the consuming means and in the immediate proximity of the said insertion and guidance means (31), a first terminal of the consuming means (2) which occupies a stable position relative to the insertion and guidance means (31), and a first terminal (35) of the storage battery means (3, 4) which is resiliently dispaceable relative to the insertion and guidance means (31) between two positions, namely a first position to which it tends resiliently and in which it is in contact with the said first terminal (57) of the consuming means (2) occupying the said stable position thereby closing the circuit, and a second position in which it is at a distance from the said first terminal (57) of the consuming means (2) occupying the said stable position thereby opening the circuit; and

   b) secondly a storage battery means charger unit (5) comprising a source of electrical energy (6) and being independent of the functional unit (1) but capable of being releasably connected thereto by electrical connection means (16, 17) including at least one pin (16) suitable for being inserted and guided in the functional unit (1) via the said insertion and guidance means (31) up to a connection position in which it holds the said first terminal (35) of the storage battery means (3, 4) in the said second position while presenting in contact with this terminal (35) an electrically conductive zone (22) which is electrically connected to a first terminal of the source (6), and while electrically isolating the said first terminal (57) of the consuming means (2) from the said first terminal (35) of the storage battery means (3, 4) and the said electrically conductive zone (22), characterized in that the functional unit (2) further comprises means (49) for switching the consuming means (2) on and off at will, wherein the said means (49) for switching the consuming means (2) on and off at will cooperate with the said first terminal (57) of the consuming means (2) to move it at will between the said stable position and another stable position distant therefrom and from both of the said first and second positions of the first terminal (35) of the storage battery means (3, 4), thereby electrically isolating the consuming means (2) with respect to the storage battery means (3, 4), the said pin (16) occupying the said connection position or not.

2. A safety device according to claim 1, characterized in that the means (49) for switching the consuming means (2) on and off at will comprise:

a bar (49) of insulating material, means for guiding the bar (49) to pivot relative to the insertion and guidance means and about an axis (53);

an electrically conductive blade (54) fixed to the bar (49) and having a first zone (55) bearing against an electrical contact tab (56) of the consuming means (2) in a zone corresponding to the axis (53) and a second zone (57) shifted relative to the axis (53) and defining the said first terminal (57) of the consuming means (2); and

means (50) for pivotally manipulating the bar (49) about the axis (53) between two positions corresponding, in respect of the second zone (57) of the said blade (54), to the said stable positions of the first terminal (57) of the consuming means.

3. A safety device according to claim 2, wherein the consuming means (2) are constituted by a lamp (2) having a filament in electrical connection between a lamp base (48) and a central lamp tab (56), characterized in that the said electrical contact tab (56) is the said central tab of the lamp (2).

4. A safety device according to claim 2 or 3, characterized in that it includes means (58) for retaining the bar (49) in the said two positions thereof.

5. A safety device according to any one of claims 1 to 4, characterized in that the said first terminal (35) of the storage battery means (3, 4) consists in a free end zone of a resiliently deformable metal blade (33) further including a zone (37) which is fixed relative to the guide means (31) for the pin (16).

6. A safety device according to any one of claims 1 to 5, characterized in that, in addition:

the said electrical connection circuit (33, 54, 46, 34) includes, in series between the storage battery means (3, 4) and the consuming means (2) a second terminal (36) of the storage battery means (3, 4) and a second terminal (45) of the consuming means (2), the second terminals being interconnected outside the said releasable connection; and

the electrical connection means (16, 17) includes a second pin (17) suitable for co-operating with the said second terminals (36, 45) during the said releasable connection to isolate them from each other and to bring into contact with the second terminal (36) of the storage battery means (3, 4), an electrically conductive zone (23) which is electrically connected to a second terminal of the source (6).

7. A safety device according to claim 6, characterized in that the said second terminals (36, 45) are relatively movable between at least a first relative position to which they are resiliently urged and in which they are in mutual contact to close the circuit, and a second relative position in which they are mutually separated to open the circuit, in that the functional unit (1) includes guide means (32) for the said second pin (17) in the proximity of the said second terminals (36, 45) to enable it to be inserted into the functional unit (1) up to a position in which it holds the said second terminals (36, 45) in the said second relative position and brings the said zone (23) into contact with the second terminal (36) of the storage battery means (3, 4).

8. A safety device according to claim 7, characterized in that the said second terminal (45) of the consuming means (2) occupies a stable position relative to the guide means (32) for the second pin (17) and in that the said second terminal (36) of the storage battery means (3, 4) is resiliently displaceable relative to the said guide means (32) for the second pin (17) between a position which coincides approximately with the said stable position of the second terminal (45) of the consuming means (2) for defining the said first relative position of the second terminals (36, 45) and a position in which it is distant from the said stable position of the second terminal (45) of the consuming means (2) to define the said second relative position of the second terminals (36, 45).

9. A safety device according to claim 8, wherein the consuming means (2) are constituted by a lamp (2) having a filament in electrical connection between a lamp base (48) and a central lamp tab (56), characterized in that the said second terminal (45) of the consuming means is constituted by a first zone (45) of an electrically conductive blade (46) further including a second zone (47) which at least partially surrounds the base (48) of the lamp (2).

10. A safety device according to claim 8 or 9, characterized in that the said second terminal (36) of the storage battery means (3, 4) consists in a free end zone of a resiliently deformable metal blade (34) further including a zone (38) which is fixed relative to the guide means (32) for the second pin (17).

**Patentansprüche**

1. Vorrichtung zum Absichern einer elektrischen Einrichtung, die umfasst:

a) zum einen eine Funktionseinheit (1), mit:
– elektrischen Verbrauchermitteln (2),
– Akkumuliermitteln (3, 4) für elektrische Energie,
– Aufnahme- und Führungsmitteln (31) für mindestens einen ersten Steckerstift (16) einer von der Funktionseinheit (1) unabhängigen Ladeeinheit (5) der Akkumuliermittel (3, 4),

– einem elektrischen Verbindungsschaltkreis (33, 54, 46, 34) zwischen den Akkumuliermitteln (3, 4) und den Verbrauchermitteln (2), der in Serie zwischen den Akkumuliermitteln (3, 4) und den Verbrauchermitteln in unmittelbarer Nachbarschaft der Aufnahme- und Führungsmittel (31) einen ersten Anschluss (57) der Verbrauchermittel (2), der eine feste Position bezüglich der Aufnahme- und Führungsmittel (31) hat, und einen ersten Anschluss (35) der Akkumuliermittel (3, 4) umfasst, der bezüglich der Aufnahme- und Führungsmittel (31) elastisch zwischen einer ersten Position, in der er elastisch gehalten ist und mit dem ersten Anschluss (57) der Verbrauchermittel (2) in der genannten festen Position in Kontakt steht, um den Schaltkreis zu schliessen, und einer zweiten Position hin- und herbewegbar ist, in der er von dem ersten Anschluss (57) der Verbrauchermittel (2) in der genannten festen Position abgehoben ist, um den Schaltkreis zu öffnen,

b) zum anderen eine Ladeeinheit (5) der Akkumuliermittel (3, 4), die eine elektrische Energiequelle (6) aufweist und unabhängig von der Funktionseinheit (1) ist, jedoch an letzterer mittels elektrischer Verbindungsmittel (16, 17) bewegbar befestigt werden kann, welche mindestens einen ersten Steckerstift (16) umfassen, der über die Aufnahme- und Führungsmittel (31) in die Funktionseinheit (1) aufgenommen und in ihr bis in eine Verbindungsposition geführt werden kann, in der er den ersten Anschluss (35) der Akkumuliermittel (3, 4) in der zweiten Position hält, in welcher er in Kontakt mit dem Anschluss (35) einen elektrischen Leitungsbereich (22) aufweist, der mit einem ersten Anschluss der Quelle (6) elektrisch verbunden ist, und in welcher er den genannten ersten Anschluss (35) der Akkumuliermittel (3, 4) und den elektrischen Leitungsbereich (22) von dem genannten ersten Anschluss (57) der Verbrauchermittel (2) isoliert,
dadurch gekennzeichnet, dass die Funktionseinheit (1) ferner Mittel (49) zum willkürlichen Ein- und Ausschalten der Verbrauchermittel (2) umfasst, die mit dem ersten Anschluss (57) der Verbrauchermittel (2) zusammenwirken, um ihn willkürlich zwischen der genannten festen Position und einer anderen, von dieser und der ersten und zweiten Position des ersten Anschlusses (35) der Akkumuliermittel (3, 4) unterschiedlichen Position hin- und herzuschalten, um die Verbrauchermittel (2) elektrisch von den Akkumuliermitteln (3, 4) zu isolieren, mag nun der erste Steckerstift (16) die Verbindungsposition einnehmen oder nicht.

2. Vorrichtung nach Anspruch 1, gekennzeichnet durch Mittel (49) zum willkürlichen Ein- und Ausschalten der Verbrauchermittel (2), die umfassen:
– einen Hebel (49) aus isolierendem Werkstoff und Führungsmittel, welche den Hebel (49) um eine Achse (53) bezüglich der Aufnahme- und Führungsmittel (31) schwenkbar halten,
– ein fest auf dem Hebel (49) gehaltenes elektrisches Leitungsblech (54), das einen ersten Bereich (55) zum Andrücken gegen einen elektrischen Kontakt (56) der Verbrauchermittel (2) in einem der Achse (53) zuzuordnenden Bereich und einen zweiten Bereich (57) umfasst, der bezüglich der Achse (53) versetzt ist und den ersten Anschluss (57) der Verbrauchermittel (2) bildet, und
– Mittel (50) zum Hin- und Herschwenken des Hebels (49) um die Achse (53) zwischen zwei Positionen, die betreffend den zweiten Bereich (57) des Leitungsblechs (54) den festen Positionen des ersten Anschlusses (57) der Verbrauchermittel entsprechen.

3. Vorrichtung nach Anspruch 2, wobei die Verbrauchermittel (2) von einer Lichtquelle (2) gebildet sind, die einen Glühfaden umfasst, der einerseits mit dem Sockel (48) der Lichtquelle und andererseits mit einem zentralen Anschluss (56) der Lichtquelle elektrisch verbunden ist, dadurch gekennzeichnet, dass der genannte elektrische Kontakt (56) der zentrale Anschluss der Lichtquelle (2) ist.

4. Vorrichtung nach Anspruch 2 oder 3, dadurch gekennzeichnet, dass die Mittel (58) zum Arretieren des Hebels (49) in seinen beiden Positionen umfasst.

5. Vorrichtung nach einem der Ansprüche 1 bis 4, dadurch gekennzeichnet, dass der erste Anschluss (35) der Akkumuliermittel (3, 4) von einem freien Endabschnitt eines Metallblechs (33) gebildet wird, das elastisch verformbar ist, und ausserdem einen bezüglich der Aufnahme- und Führungsmittel (31) des Steckerstifts (16) festen Abschnitt (37) umfasst.

6. Vorrichtung nach einem der Ansprüche 1 bis 5, dadurch gekennzeichnet, dass
– der elektrische Verbindungsschaltkreis (33, 54, 46, 34) in Serie zwischen den Akkumuliermitteln (3, 4) und den Verbrauchermitteln (2) einen zweiten Anschluss (36) der Akkumuliermittel (3, 4) und einen zweiten Anschluss (45) der Verbrauchermittel (2) umfasst, die ausserhalb der genannten Verbindung elektrisch miteinander verbunden sind, und
– die elektrischen Verbindungsmittel (16, 17) einen zweiten Steckerstift (17) umfassen, der mit den zweiten Anschlüssen (36, 45) zusammenarbeitet, während der genannten Verbindung, um sie voneinander elektrisch zu isolieren und einen elektrischen Leitungsbereich (23) mit dem zweiten Anschluss (36) der Akkumuliermittel (3, 4) in Kontakt zu bringen, der elektrisch an einem zweiten Anschluss der Quelle (6) angeschlossen ist.

7. Vorrichtung nach Anspruch 6, dadurch gekennzeichnet, dass die zweiten Anschlüsse (36, 45) mindestens zwischen einer ersten Relativposition, in welcher sie elastisch gehalten sind und miteinander in Kontakt stehen, um den Schaltkreis zu schliessen, und einer zweiten Relativposition hin- und herbewegbar sind, in welcher sie voneinander abgehoben sind, um den Schaltkreis zu öffnen, wobei die Funktionseinheit (1) Führungsmittel (32) für den zweiten Steckerstift (17) in der Nähe der zweiten Anschlüsse (36, 45) umfasst, um dessen Einführen in die Funktionseinheit (1) bis in eine Position zu erlauben, in welcher er die zweiten Anschlüsse (36, 45) in den zweiten Relativpositionen zurückhält und den zweiten Anschluss (36) der Akkumuliermittel (3, 4) mit dem genannten Leitungsbereich (23) in Kontakt bringt.

8. Vorrichtung nach Anspruch 7, dadurch gekennzeichnet, dass der zweite Anschluss (45) der Verbrauchermittel (2) eine feste Position bezüglich der Führungsmittel (32) des zweiten Steckerstifts (17) hat und dass der zweite Anschluss (36) der Akkumuliermittel (3, 4) elastisch bezüglich der Führungsmittel (32) des zweiten Steckerstifts (17) zwischen einer Position, die in etwa mit der festen Position des zweiten Anschlusses (45) der Verbrauchermittel (2) übereinstimmt, um die erste Relativposition der zweiten Anschlüsse (36, 45) festzulegen, und einer zweiten Position hin- und herbewegbar ist, in welcher er von der festen Position des zweiten Anschlusses (45) der Verbrauchermittel (2) abgehoben ist, um die zweite Relativposition der zweiten Anschlüsse (36, 45) festzulegen.

9. Vorrichtung nach Anspruch 8, wobei die Verbrauchermittel (2) von einer Lichtquelle (2) gebildet sind, welche einen Glühfaden umfasst, der einerseits mit einem Sockel (48) der Lichtquelle und andererseits mit einem zentralen Anschluss (56) der Lichtquelle elektrisch verbunden ist, dadurch gekennzeichnet, dass der zweite Anschluss (45) der Verbrauchermittel von einem ersten Abschnitt (45) eines elektrischen Leitungsblechs (46) gebildet ist, das andererseits einen zweiten Abschnitt (47) umfasst, welcher mindestens teilweise den Sockel (48) der Lichtquelle (2) umschliesst.

10. Vorrichtung nach Anspruch 8 oder 9, dadurch gekennzeichnet, dass der zweite Anschluss (36) der Akkumuliermittel (3, 4) einen freien Endabschnitt eines Blechs (34) umfasst, das elastisch verformbar ist und ferner einen Abschnitt (38) beinhaltet, der bezüglich der Führungsmittel (32) des zweiten Steckerstifts (17) fest ist.

0 135 409

FIG. 1

FIG. 2

FIG. 3

0 135 409

FIG_4

FIG_5

13

FIG_6

FIG_7